# EUROPEAN PATENT SPECIFICATION

(11) **EP 1 306 148 B1**
(45) Date of publication and mention of the grant of the patent: **20.09.2006**
(21) Application number: 01125778.9
(22) Date of filing: 29.10.2001
(51) Int. Cl.: B22F 1/00, C04B 35/634, B22F 3/22

(54) **Method for gel casting bodies from ceramic glass or metal powder**
Verfahren zum Gelgiessen von Formkörpern aus Keramik, Glas oder Metallpulver
Procédé pour la coulée de gel de corps en poudre de céramique, verre ou métal

(43) Date of publication of application: 02.05.2003
(73) Proprietor: Ceratizit Luxembourg Sàrl, 8232 Mamer (LU)
(72) Inventor: Gales, Francois, 3337 Hellange (LU)
(74) Representative: Kihn, Pierre Emile Joseph

(56) References cited:
- DE-A- 19 709 651
- US-A- 5 258 151
- US-A- 6 075 082
- DATABASE CA [Online] CHEMICAL ABSTRACTS SERVICE, COLUMBUS, OHIO, US; TANABE, SHINGO: "Shaped plastic magnets" retrieved from STN Database accession no. 109:203553 CA XP002195457 & JP 63 136503 A (DAINIPPON INK AND CHEMICALS, INC., JAPAN) 8 June 1988 (1988-06-08)
- DATABASE CA [Online] CHEMICAL ABSTRACTS SERVICE, COLUMBUS, OHIO, US; YAGINUMA, TORU ET AL: "Curable resins for wet-forming ceramic or metal powders with aqueous solvents" retrieved from STN Database accession no. 135:289592 CA XP002195458 & JP 2001 278673 A (TORAY INDUSTRIES, INC., JAPAN) 10 October 2001 (2001-10-10)
- PATENT ABSTRACTS OF JAPAN vol. 013, no. 105 (C-575), 13 March 1989 (1989-03-13) & JP 63 278987 A (AIKOO KK), 16 November 1988 (1988-11-16)

## Description

The present invention relates to a method for molding ceramic, glass and/or metal powders and a ready-to-use molding composition system.

Gel casting process is well known and is described in the following patents: US Pat. No. 4,894,194, US Pat. No. 5,028,362, US Pat. No. 5,145,908, US Pat. No. 6,066,279.

Older powder casting techniques that make use of the property of porous plaster molds to remove water from a casting slurry are widely used in the dinnerware and sanitaryware industries, working with clay-based materials. This technique has been mechanized to a high degree (pressure casting), but has remained limited to powders that allow aqueous processing, and, since it is basically a filtration process, is limited to a wall thickness of 10 to 15 mm.

The gel casting processing route starts with making a highly concentrated mixture (slurry) of the powder to be cast into the desired shape with a liquid, consisting of polymer precursor chemicals, a solvent that can be a high boiling organic plasticizer or water, and a dispersing agent. The resulting dispersion is cast into a mold, where it hardens into a shaped, solid ceramic, glass or metal part (green part) by polymerization and crosslinking. This reaction is generally triggered by the addition of free-radical initiator and the input of heat.

After the part is removed from the mold, the temporary binder is removed by evaporation of the solvent or plasticizer and by thermal decomposition of the resin. The remaining powder, having retained the shape produced by the mold cavity, is finally sintered into a ceramic, glass or metal part.

Major drawbacks of existing gel casting technology are:
- high decomposition temperature of the free-radical initiators, such as peroxides, hydroperoxides, azo and diazo compounds, commonly used to initiate polymerization: high temperature increases aggressivity for the mold material employed. This makes it impossible to work with silicone molds produced from master molds.
- some peroxides are inactivated by certain metals, notably cobalt.
- water is not always suitable as solvent, as some powders are not stable when in contact with water.

US Pat. No. 5,258,151 pertains to ceramic or powder-metallurgical molding compositions, which contain a wax as the binder. The addition of an epoxy resin is used to improve the dry flexural strength and the workability in the green state of shaped articles.

JP 2001278673 relates to an aqueous-solvent curable resin for wet molding, which enables to enhance the productivity and the quality of sintered compact by minimizing the probability of causing defects in the step of producing a precursor for sintering.

### Object of the invention

The object of the present invention is to provide a method for gel casting any powder, which is not subject to the above drawbacks.

### General description of the invention

In order to overcome the above mentioned problems, the present invention provides a method for molding ceramic, glass and/or metal powders comprising the steps of
(a) forming a slurry mixture comprising said powder, a dispersant for said powder, two components of a two-component resin-hardener system and an organic solvent;
(b) transferring said slurry mixture into a mold;
(c) heating said mold containing said slurry at a temperature between 25°C and 100°C for a time sufficient to cause said two components to polymerize and crosslink to form a polymer-solvent gel matrix, whereby said slurry mixture is transformed into a solid, shaped product.

The use of a two-component (resin―hardener) system instead of a polymerization triggered with a free-radical compound eliminates the need for aggressive initiators.

This method is suitable for gel casting of any powder into large and intricate shapes, i. e. of wall thickness of up to 30 mm, and a size limited mainly by mold making techniques. Furthermore, the present method allows the use of silicone, polyurethane or plaster molds, and also permits the molding of powders containing cobalt or other peroxide or azo inhibitors.

An additional advantage of this method, is the fact that, due to the absence of initiators, the polymerization and the hardening occur at moderate temperatures, i.e. from about room temperature to about 100°C, preferably at a temperature up to 90°C.

The polymerization is sufficiently slow at room temperature to allow processing of the casting mix during several hours, but is easily triggered only by raising the temperature to a moderate 50°C.

This may pose great problems when the process is to be scaled up: even at room temperature, reaction speed is not zero, and, in case of an exothermic process, is known to be sensitive to batch size.

Therefore, in a further important aspect, the present invention provides a gel casting method for molding ceramic, glass and/or metal powders, wherein step (a) includes the operations of
(a1) forming a slurry mixture A comprising said powder, a dispersant for said powder, a first component of a two-component system and an organic solvent;
(a2) forming a slurry mixture B comprising said powder, a dispersant for said powder, a second component of a two-component system and an organic solvent;
(a3) mixing the two slurry mixtures A and B, in a proportion giving the chemical balance between the two components of the two-component system, into a casting slurry.

The major benefit of this preferred embodiment is to keep the two reactive components of the system apart as long as possible, while adjusting the physical properties of the two slurry mixtures, in terms of powder loads, overall viscosity and density. By adjusting the ratio of solvent (or plasticizer) to the reactive component in each part A and B, it is even possible, if so desired, to obtain two parts with equal volumes. Since the two reacting partners are separated, shelf lives of several days are achieved and since the physical properties of the two slurries are very similar, their mixing is highly simplified and accelerated.

Another feature in this embodiment is an optional step of (pre)heating separately the slurry mixtures A and B to a temperature between 25°C and 100°C, preferably from 40°C to 90°C, prior to their mixing in operation (a3). The (pre)heating to temperatures notably higher than reaction temperature is possible, hardening thus being greatly accelerated.

To further improve the method of the present invention, the mold in step (b) may be preheated to a temperature between 25°C and 100°C, preferably from 40°C to 90°C, and most preferably to the temperature used in the following step (c), thus guaranteeing a uniform and rapid hardening throughout the cross-section of the green part.

The use of a two-component system that can be preheated prior to casting or injection allows an efficient mechanization of the process.

Molding methods that are suitable for use in the present invention include gravimetric casting into open or closed molds, centrifugal casting, vacuum casting, injection molding, extrusion or tape casting by doctor blade.

Powders suitable for this process are glass powders, oxide, nitride or carbide ceramic powders, metal powders, or powdered mixtures or solid solutions of such elements or composites. Generally speaking, all powders that form a surface layer of hydroxyl groups in contact with the atmosphere are suitable for this process.

To facilitate the transformation into a fully dense material at a later stage of the process (step (f), below), the initial powder dispersion is preferably made as highly concentrated as possible, i. e. about 45 to 55 % in volume. This powder load is facilitated by adding dispersing agents to the solution.

The dispersing agents are of the same type as used in other molding methods where powders are dispersed in an organic binder system: powder injection molding, extrusion, pressure casting, tape casting, etc. They are generally polar molecules with carboxyl groups present that adsorb to the hydroxyl groups on the surface of the powder. Examples of effective dispersing agents in organic liquids are phosphor esters or stearic acid. Dispersants with low acid value are not effective, especially in polar liquids as used in the present invention.

The two-component system that has been successfully put to use in the present invention comprises epoxy resins as a first component. Epoxy resins are generally obtained by the reaction of bisphenol A or bisphenol F and epichlorhydrine, and are moderately to highly viscous liquids. The resin molecule is in itself a polyether chain with at least two epoxy (or oxirane) functional groups, e.g. one at each extremity. Preferred low molecular weight di- and triglycidylether monomers are selected from the group of polypropyleneglycol diglycidylether, 1,4-butanediol diglycidylether, cyclohexane dimethanol diglycidylether and trimethylol propane triglycidylether and their mixtures. A specially preferred epoxy monomer is cyclohexane dimethanol diglycidylether.

These resins are hardened and cured by reacting with a second component (hardener) that is generally a primary and/or secondary di- or triamine. Each primary and/or secondary amine group reacts with two oxirane groups for complete reaction, thus giving a crosslinked three-dimensional network of cured resin.

A problem that proved to be difficult to surmount when formulating epoxy resins for gel casting was a strong interference of the dispersing agents with numerous diamine hardeners that were tested, resulting in an inhibition of the dispersing action: the casting mix thickens after a few seconds or a few minutes and becomes impossible to pour into the mold. The interference is most probably due to an acid-base reaction between the amine groups and the acid functions of the dispersing agent. Some of the hardeners that did not interfere with the most effective dispersants used are molecules that have at least one primary amine function on an aliphatic chain and at least one secondary amine group in a saturated ring. Combinations or mixtures of different primary and/or secondary di- and/or triamines are also possible epoxy hardeners. An especially preferred hardener for the purpose of the present invention therefore comprises N-aminoethylpiperazine (AEP), containing a primary (aliphatic), a secondary (ring) and a tertiary amine group.

The high viscosity of the resin prepolymer is problematic for the purpose of formulating a low viscosity casting liquid with a high powder filling ratio. Precursor chemicals that accept high powder loading and work well when diluted with solvents or plasticizers, are for example low molecular weight (MW < 500) di- and triglycidylethers, such as polypropyleneglycol diglycidylether, 1,4-butanediol diglycidylether, cyclohexane dimethanol diglycidylether or trimethylol propane triglycidylether.

Hence, a favored two-component system for use in the present method comprises cyclohexane dimethanol diglycidylether monomer as a first component and N-aminoethylpiperazine monomer as a second component.

In another preferred two-component system, 10 to 100 % of the cyclohexane dimethanol diglycidylether monomer above may be replaced by one or several low molecular weight di- and triglycidylether monomers, as described above.

Although the present invention describes the use of two-component systems, systems with more than two reactive monomer compounds might as well be used in the present method and are within the scope of the invention. In these cases, some or all of the components may be premixed separately with the powder and the dispersant to avoid possible premature and/or undesirable reactions and hence to improve the shelf life of the slurry mixtures.

Additives, other than solvents, plasticizers or dispersants, can be included in the slurry mixture(s) in order to modify the gel properties or to improve the shelf-life of the slurries, their mixing properties and/or the storage characteristics of the green product. Examples of suitable additives include emulsifiers, thickeners, foaming agents, suspending agents, preservatives, etc. The quantity of additive used can vary widely, depending on its role in the slurry mixture(s) or in the green product.

The strength of the resulting green parts can be adjusted according to their aspect ratio: long, thin shapes are preferably cast with a higher resin content in the solvent - up to 75 % - large, massive shapes are best obtained with a lower resin content - 20 or 30% - in the binder mix.

As mentioned above, the green parts are then generally treated to eliminate any organic constituents. A further aspect of the present invention therefore is a method for molding inorganic powders as previously described with the following additional steps of
(d) removing said solid, shaped product from said mold;
(e) heating said solid, shaped product at a temperature greater than about 130°C for several hours to remove said organic solvent from said product, and
(f) further heating said solid, shaped product to a temperature greater than 400°C for a time sufficient to remove said polymer from said product.

Prior to thermal decomposition of the polymer (step (f)), the solvent/plasticizer is removed by a process that essentially relates to drying (step (e)). Due to the thermosetting nature of the resin, this drying step is with little shrinkage, and thus without cracks.

To facilitate the later elimination of the organic phases in the hardened product, the amount of solvent used is as high as possible, between 25 and 90% of the total of organic material. We have found suitable to use very high boiling liquids that allow the dispersion to be processed in a vacuum of a few millibars, selected from the group of high-boiling polar organic solvents and plasticizers, comprising phthalate esters, di- and tribasic esters, long-chain alcohols and aromatic alcohols. Especially preferred solvents for the purpose of the present method are compounds, such as di-methyl-phthalate (DMP), di-ethyl-phthalate (DEP) or di-butyl-phthalate (DBP). This type of molecule is widely used as plasticizer for polymers.

Another important aspect of the present invention is a molding composition system for molding ceramic, glass and/or metal powders comprising the following ingredients:
(1) powder dispersion of a ceramic, glass and/or metal powder in a dispersant,
(2) high-boiling polar organic solvent,
(3) epoxy resin with at least two oxirane groups,
(4) amine hardener with at least two primary and/or secondary amine groups, and
(5) optionally one or more additives.

A major advantage of such a molding composition system, other than the lack of aggressive initiators and the use of moderate temperatures, is a longer shelf-life of the ready-to-use mixture of the above mixture. This extended shelf-life allows larger batches and thus better homogeneity and greater uniformity of the resulting products.

In a still further preferred embodiment of the invention, the molding composition system is forming a two part system ready-to-use by simply mixing the two parts A and B, wherein a first part (A) comprises ingredients (1), (2), (3) and (5) and a second part (B) comprises ingredients (1), (2), (4) and (5). The separation of the two reactive components (3) and (4), while adding all other ingredients (1), (2) and (5) to each part, further increases the time before any polymerization or hardening reaction of the ingredients. Yet, the similar physical properties, in terms of viscosity and powder loads, of the two parts makes it easy to mix the two slurries just before their injection in the mold. The optional ingredient(s) (5) may be the same or different in the two parts (A) and (B) and they are preferably added only when needed, e.g. to improve some of the properties mentioned above.

Because of the non-reactivity of each separate part, it is even possible to preheat them individually at temperatures well above the temperature needed for reaction, the rate of hardening of the final mixed slurry being thus greatly accelerated.

The ingredients that may be used in the present molding composition system are those generally described above. For example, the epoxy resin with at least two oxirane groups (ingredient (3)) preferably comprises one or more low molecular weight di- and triglycidylether monomers, such as those selected from the group of polypropyleneglycol diglycidylether, 1,4-butanediol diglycidylether, cyclohexane dimethanol diglycidylether and trimethylol propane triglycidylether and their mixtures. The amine hardener with at least two primary and/or secondary amine groups (ingredient (4)) generally comprises one or more triamines with at least one primary and at least one secondary amine group, such as those cited above.

In a particularly preferred embodiment of the molding composition system of the present invention, the epoxy resin (ingredient (3)) comprises cyclohexane dimethanol diglycidylether and the hardener (ingredient (4)) comprises N-aminoethylpiperazine, wherein 10 to 100 % of the cyclohexane dimethanol diglycidylether monomer above may be replaced by one or several low molecular weight di- and triglycidylether monomers, as mentionned above.

### Examples:

1) The following ingredients were mixed in a high shear laboratory dissolver:

| | |
|---|---|
| Cyclohexane dimethanol diglycidylether | 131 g |
| N-aminoethylpiperazine | 36 g |
| Di-butyl-phthalate | 333 g |
| Dispersant | 29 g |
| Hardmetal powder (WC-Co) | 6600 g |

The resulting slurry was cast into a silicone rubber mold and hardened in a laboratory oven in air at 50°C.
Cavity size; 120 x 60 x 30 mm.
After hardening overnight, the green part was removed from the mold, put on a graphite tray and subjected to the following heating schedule in hydrogen atmosphere in an industrial presintering kiln:

| | |
|---|---|
| 20 - 250°C | 23 h |
| 250 - 350°C | 4h |
| 350 - 500°C | 2h |
| 550 - 850°C | 2h |

The resulting presintered part was without defects. It was sintered in vacuum to 1350°C to a fully dense hardmetal that was within materials specifications.
Linear shrinkage: 29%.
2) The following ingredients were mixed in a high shear dissolver:

| | Part | A | B |
|---|---|---|---|
| Cyclohexane dimethanol diglycidylether | | 262 | - |
| N-aminoethylpiperazine | | - | 72 |
| Di-butyl-phthalate | | 235 | 422 |
| Dispersant | | 29 | 29 |
| Hardmetal powder (WC-Co) | | 6600 | 6600 |

The two parts were heated separately to 90°C, briefly mixed in a ratio 1:1, and cast into a silicone rubber mold that was preheated to 50°C. The cavity content hardened within 30 minutes.
Cavity size: 120 x 60 x 30 mm.
After cooling, the green part was removed from the mold, put on a graphite tray and subjected to the following heating schedule in hydrogen atmosphere in an industrial presintering kiln:

| | |
|---|---|
| 20 - 250°C | 23 h |
| 250 - 350°C | 4h |
| 350 - 500°C | 2h |
| 550 - 850°C | 2h |

The resulting presintered part was without defects. It was sintered to 1350°C to a fully dense hardmetal that was within materials specifications. Linear shrinkage: 29%.

## Claims

1. A method for molding ceramic, glass and/or metal powders comprising the steps of
(a) forming a slurry mixture comprising said powder, a dispersant for said powder, two components of a two-component resin-hardener system and an organic solvent;
(b) transferring said slurry mixture into a mold;
(c) heating said mold containing said slurry at a temperature between 25°C and 100°C for a time sufficient to cause said two components to polymerize and crosslink to form a polymer-solvent gel matrix, whereby said slurry mixture is transformed into a solid, shaped product.

2. A method as defined in Claim 1, wherein step (a) includes the operations of
(a1) forming a slurry mixture A comprising said powder, a dispersant for said powder, a first component of a two-component system and an organic solvent;
(a2) forming a slurry mixture B comprising said powder, a dispersant for said powder, a second component of a two-component system and an organic solvent;
(a3) mixing the two slurry mixtures A and B, in a proportion giving the chemical balance between the two components of the two-component system, into a casting slurry.

3. A method as defined in Claim 2, further comprising the step of heating separately said slurry mixtures A and B to a temperature between 25°C and 100°C prior to operation (a3).

4. A method as defined in any one of the preceding claims, wherein the mold in step (b) has been preheated to a temperature between 25°C and 100°C.

5. A method as defined in any one of the preceding claims, wherein the first component comprises epoxy resins with at least two oxirane groups.

6. A method as defined in Claim 5, wherein said epoxy resins comprise one or more low molecular weight di- and triglycidylether monomers.

7. A method as defined in Claim 6, wherein said low molecular weight di- and triglycidylether monomers are selected from the group of polypropyleneglycol diglycidylether, 1,4-butanediol diglycidylether, cyclohexane dimethanol diglycidylether and trimethylol propane triglycidylether and their mixtures.

8. A method as defined in any one of the preceding claims, wherein the second component comprises amine hardener monomers with at least two primary and/or secondary amine groups.

9. A method as defined in Claim 8, wherein said amine hardener monomers comprise one or more triamines with at least one primary and at least one secondary amine group.

10. A method as defined in any one of the preceding claims, wherein said first component comprises cyclohexane dimethanol diglycidylether monomer and said second component comprises N-aminoethylpiperazine monomer.

11. A method as defined in any one of the preceding claims, wherein the organic solvent is selected from the group of high-boiling polar organic solvents and plasticizers, comprising phthalate esters, di- and tribasic esters, long-chain alcohols and aromatic alcohols.

12. A method as defined in any one of the preceding claims, further comprising the steps of
(d) removing said solid, shaped product from said mold;
(e) heating said solid, shaped product at a temperature greater than about 130°C for several hours to remove said organic solvent from said product, and
(f) further heating said solid, shaped product to a temperature greater than 400°C for a time sufficient to remove said polymer from said product.

13. Molding composition system for molding ceramic, glass and/or metal powders comprising the following ingredients:
(1) powder dispersion of a ceramic, glass and/or metal powder in a dispersant,
(2) high-boiling polar organic solvent,
(3) epoxy resin with at least two oxirane groups,
(4) amine hardener with at least two primary and/or secondary amine groups, and
(5) optionally one or more additives.

14. Molding composition system as defined in Claim 13, being a two part system ready for use by mixing the two parts, wherein a first part comprises ingredients (1), (2), (3) and (5) and a second part comprises ingredients (1), (2), (4) and (5).

15. Molding composition system as defined in any one of Claims 13 or 14, wherein ingredient (3) comprises one or more low molecular weight di- and triglycidylether monomers.

16. Molding composition system as defined in Claim 15, wherein said low molecular weight di- and triglycidylether monomers are selected from the group of polypropyleneglycol diglycidylether, 1,4-butanediol diglycidylether, cyclohexane dimethanol diglycidylether and trimethylol propane triglycidylether and their mixtures.

17. Molding composition system as defined in any one of Claims 13 to 16, wherein ingredient (4) comprises one or more triamines with at least one primary and at least one secondary amine group.

18. Molding composition system as defined in any one of Claims 13 to 17, wherein ingredient (3) comprises cyclohexane dimethanol diglycidylether and ingredient (4) comprises N-aminoethylpiperazine.

## Patentansprüche

1. Verfahren zum Formen von Keramik-, Glas- und/oder Metallpulvern, umfassend folgende Schritte:
(a) Bilden eines Schlammgemisches, das das Pulver, ein Dispergiermittel für das Pulver, zwei Komponenten eines Zwei-Komponenten-Harzhärter-Systems und ein organisches Lösungsmittel umfasst;
(b) Weitergeben des Schlammgemisches in ein Formwerkzeug;
(c) Erhitzen des den Schlamm enthaltenden Formwerkzeugs bei einer Temperatur zwischen 25°C und 100°C für einen Zeitraum, der ausreicht, um die Polymerisation und Vernetzung der zwei Komponenten herbeizuführen, um eine Polymer-Lösungsmittel-Gelmatrix zu bilden, wodurch das Schlammgemisch in ein festes, geformtes Produkt umgewandelt wird.

2. Verfahren nach Anspruch 1, wobei der Schritt (a) folgende Vorgänge umfasst:
(a1) Bilden eines Schlammgemisches A, das das Pulver, ein Dispergiermittel für das Pulver, eine erste Komponente eines Zwei-Komponenten-Systems und ein organisches Lösungsmittel umfasst;
(a2) Bilden eines Schlammgemisches B, das das Pulver, ein Dispergiermittel für das Pulver, eine zweite Komponente eines Zwei-Komponenten-Systems und ein organisches Lösungsmittel umfasst;
(a3) Mischen der zwei Schlammgemische A und B in einem Verhältnis, das das chemische Gleichgewicht zwischen den zwei Komponenten des Zwei-Komponenten-Systems ergibt, zu einem Gussschlamm.

3. Verfahren nach Anspruch 2, ferner umfassend den Schritt des getrennten Erhitzens der Schlammgemische A und B auf eine Temperatur zwischen 25°C und 100°C vor dem Vorgang (a3).

4. Verfahren nach irgendeinem der vorangehenden Ansprüche, wobei das Formwerkzeug im Schritt (b) auf eine Temperatur zwischen 25°C und 100°C vorerhitzt wurde.

5. Verfahren nach irgendeinem der vorangehenden Ansprüche, wobei die erste Komponente Epoxidharze mit mindestens zwei Oxirangruppen umfasst.

6. Verfahren nach Anspruch 5, wobei die Epoxidharze ein oder mehrere Di- und Triglycidylether-Monomere mit niedrigem Molekulargewicht umfassen.

7. Verfahren nach Anspruch 6, wobei die Di- und Triglycidylether-Monomere mit niedrigem Molekulargewicht aus der Gruppe von Polypropylenglykol-Diglycidylether, 1,4-Butandiol-Diglycidylether, Cyclohexandimethanol-Diglycidylether und Trimethylolpropan-Triglycidylether und deren Gemischen ausgewählt werden.

8. Verfahren nach irgendeinem der vorangehenden Ansprüche, wobei die zweite Komponente Aminhärter-Monomere mit mindestens zwei primären und/oder sekundären Amingruppen umfasst.

9. Verfahren nach Anspruch 8, wobei die Aminhärter-Monomere ein oder mehrere Triamine mit mindestens einer primären und mindestens einer sekundären Amingruppe umfassen.

10. Verfahren nach irgendeinem der vorangehenden Ansprüche, wobei die erste Komponente Cyclohexandimethanol-Diglycidylether-Monomer und die zweite Komponente N-Aminoethylpiperazin-Monomer umfasst.

11. Verfahren nach irgendeinem der vorangehenden Ansprüche, wobei das organische Lösungsmittel aus der Gruppe von hoch siedenden polaren organischen Lösungsmitteln und Weichmachern ausgewählt wird, die Phthalatester, zwei- und dreibasische Ester, langkettige Alkohole und aromatische Alkohole umfassen.

12. Verfahren nach irgendeinem der vorangehenden Ansprüche, ferner umfassend folgende Schritte:
(d) Entfernen des festen, geformten Produkts aus dem Formwerkzeug;
(e) Erhitzen des festen, geformten Produkts bei einer Temperatur über ungefähr 130°C für mehrere Stunden, um das organische Lösungsmittel aus dem Produkt zu entfernen; und
(f) weiteres Erhitzen des festen, geformten Produkts auf eine Temperatur über 400°C für einen Zeitraum, der zum Entfernen des Polymers aus dem Produkt ausreicht.

13. Formmassesystem zum Formen von Keramik-, Glas- und/oder Metallpulvern, umfassend die folgenden Bestandteile:
(1) Pulverdispersion eines Keramik-, Glas- und/oder Metallpulvers in einem Dispergiermittel,
(2) hoch siedendes polares organisches Lösungsmittel,
(3) Epoxidharz mit mindestens zwei Oxirangruppen,
(4) Aminhärter mit mindestens zwei primären und/oder sekundären Amingruppen, und
(5) optional ein oder mehrere Additive.

14. Formmassesystem nach Anspruch 13, das ein zweiteiliges System ist, das durch Mischen der zwei Teile gebrauchsfertig wird, wobei ein erster Teil die Bestandteile (1), (2), (3) und (5) und ein zweiter Teil die Bestandteile (1), (2), (4) und (5) umfasst.

15. Formmassesystem nach irgendeinem der Ansprüche 13 oder 14, wobei der Bestandteil (3) ein oder mehrere Di- und Triglycidylether-Monomere mit niedrigem Molekulargewicht umfasst.

16. Formmassesystem nach Anspruch 15, wobei die Di- und Triglycidylether-Monomere mit niedrigem Molekulargewicht aus der Gruppe von Polypropylenglykol-Diglycidylether, 1,4-Butandiol-Diglycidylether, Cyclohexandimethanol-Diglycidylether und Trimethylolpropan-Triglycidylether und deren Gemischen ausgewählt werden.

17. Formmassesystem nach irgendeinem der Ansprüche 13 bis 16, wobei der Bestandteil (4) ein oder mehrere Triamine mit mindestens einer primären und mindestens einer sekundären Amingruppe umfasst.

18. Formmassesystem nach irgendeinem der Ansprüche 13 bis 17, wobei der Bestandteil (3) Cyclohexandimethanol-Diglycidylether und der Bestandteil (4) N-Aminoethylpiperazin umfasst.

## Revendications

1. Procédé de moulage de poudres de céramique, de verre et/ou de métal comprenant les étapes consistant à :
(a) former un mélange de barbotine comprenant ladite poudre, un dispersant pour ladite poudre, deux composants d'un système résine-durcisseur à deux composants et un solvant organique;
(b) transférer ledit mélange de barbotine dans un moule;
(c) chauffer ledit moule contenant ladite barbotine à une température comprise entre 25°C et 100°C pendant une durée suffisante pour amener lesdits deux composants à polymériser et à réticuler afin de former une matrice de gel polymère-solvant, moyennant quoi ledit mélange de barbotine est transformé en un produit solide façonné.

2. Procédé selon la revendication 1, dans lequel l'étape (a) comprend les opérations consistant à
(a1) former un mélange de barbotine A comprenant ladite poudre, un dispersant pour ladite poudre, un premier composant d'un système à deux composants et un solvant organique;
(a2) former un mélange de barbotine B comprenant ladite poudre, un dispersant pour ladite poudre, un second composant d'un système à deux composants et un solvant organique;
(a3) mélanger les deux mélanges de barbotine A et B, dans une proportion produisant l'équilibre chimique entre les deux composants du système à deux composants, dans une barbotine de coulage.

3. Procédé selon la revendication 2, comprenant en outre l'étape consistant à chauffer séparément lesdits mélanges de barbotine A et B à une température comprise entre 25°C et 100°C avant l'opération (a3).

4. Procédé selon l'une quelconque des revendications précédentes, dans lequel le moule de l'étape (b) a été préchauffé à une température comprise entre 25°C et 100°C.

5. Procédé selon l'une quelconque des revendications précédentes, dans lequel le premier composant comprend des résines époxy avec au moins deux groupes oxyrane.

6. Procédé selon la revendication 5, dans lequel lesdites résines époxy comprennent un ou plusieurs monomères de di- et triglycidyléther de faible poids moléculaire.

7. Procédé selon la revendication 6, dans lequel lesdits monomères de di- et triglycidyléther de faible poids moléculaire sont sélectionnés dans le groupe comprenant le diglycidyléther de polypropylèneglycol, le diglycidyléther de butane-1,4-diol, le diglycidyléther de cyclohexane diméthanol et le triglycidyléther de triméthylolpropane et leurs mélanges.

8. Procédé selon l'une quelconque des revendications précédentes, dans lequel le second composant comprend des monomères durcisseurs aminés comportant au moins deux groupes amine primaires et/ou secondaires.

9. Procédé selon la revendication 8, dans lequel lesdits monomères durcisseurs aminés comprennent une ou plusieurs triamines avec au moins un groupe amine primaire et au moins un groupe amine secondaire.

10. Procédé selon l'une quelconque des revendications précédentes, dans lequel ledit premier composant comprend un monomère de diglycidyléther de cyclohexane diméthanol et ledit second composant comprend un monomère de N-aminoéthylpipérazine.

11. Procédé selon l'une quelconque des revendications précédentes, dans lequel le solvant organique est sélectionné dans le groupe constitué de solvants et de plastifiants organiques polaires à haut point d'ébullition, comprenant les esters de phtalate, les esters di- et tribasiques, les alcools à longue chaîne et les alcools aromatiques.

12. Procédé selon l'une quelconque des revendications précédentes, comprenant en outre les étapes consistant à
(d) retirer ledit produit solide façonné dudit moule;
(e) chauffer ledit produit solide façonné à une température supérieure à environ 130°C pendant plusieurs heures pour supprimer ledit solvant organique dudit produit, et
(f) chauffer encore ledit produit solide façonné à une température supérieure à 400°C pendant une durée suffisante pour supprimer ledit polymère dudit produit.

13. Système de composition de moulage pour mouler des poudres de céramique, de verre et/ou de métal comprenant les ingrédients suivants :
(1) une dispersion poudreuse d'une poudre de céramique, de verre et/ou de métal dans un dispersant,
(2) un solvant organique polaire à haut point d'ébullition,
(3) une résine époxy avec au moins deux groupes oxyrane,
(4) un durcisseur aminé avec au moins deux groupes amine primaires et/ou secondaires, et
(5) en option, un ou plusieurs additifs.

14. Système de composition de moulage selon la revendication 13, qui est un système à deux parties prêt à l'emploi en mélangeant les deux parties, dans lequel une première partie comprend les ingrédients (1), (2), (3) et (5) et une seconde partie comprend les ingrédients (1), (2), (4) et (5).

15. Système de composition de moulage selon l'une quelconque des revendications 13 ou 14, dans lequel l'ingrédient (3) comprend un ou plusieurs monomères de di- et triglycidyléther de faible poids moléculaire.

16. Système de composition de moulage selon la revendication 15, dans lequel lesdits monomères de di- et triglycidyléther de faible poids moléculaire sont sélectionnés dans le groupe comprenant le diglycidyléther de polypropylèneglycol, le diglycidyléther de butane-1,4-diol, le diglycidyléther de cyclohexane diméthanol et le triglycidyléther de triméthylolpropane et leurs mélanges.

17. Système de composition de moulage selon l'une quelconque des revendications 13 à 16, dans lequel l'ingrédient (4) comprend une ou plusieurs triamines avec au moins un groupe amine primaire et au moins un groupe amine secondaire.

18. Système de composition de moulage selon l'une quelconque des revendications 13 à 17, dans lequel l'ingrédient (3) comprend le diglycidyléther de cyclohexane diméthanol et l'ingrédient (4) comprend la N-aminoéthylpipérazine.
